Europäisches Patentamt

European Patent Office

Office européen des brevets

(11) Veröffentlichungsnummer: **0 260 589**
**A1**

## (12) EUROPÄISCHE PATENTANMELDUNG

(21) Anmeldenummer: **87113172.8**

(22) Anmeldetag: **09.09.87**

(51) Int. Cl.⁴: **A01G 9/02** , E04C 1/39

(30) Priorität: **13.09.86 DE 8624623 U**

(43) Veröffentlichungstag der Anmeldung:
**23.03.88 Patentblatt 88/12**

(84) Benannte Vertragsstaaten:
**AT BE CH DE ES FR GB GR IT LI LU NL SE**

(71) Anmelder: **Kroll, Albrecht**
**Osterfeldstrasse 79**
**D-2000 Hamburg 54(DE)**

(72) Erfinder: **Kroll, Albrecht**
**Osterfeldstrasse 79**
**D-2000 Hamburg 54(DE)**

(74) Vertreter: **Fleck, Thomas, Dr.Dipl.-Chem. et al**
**Patentanwälte Raffay, Fleck & Partner**
**Postfach 32 32 17**
**D-2000 Hamburg 13(DE)**

(54) **Kombinations-Pflanzenbehälter.**

(57) Ein Kombinations-Pflanzenbehälter, der eine Kubusform umfaßt, mit sechs Wänden (1) gleicher Größe und quadratischer Form, von denen mindestens eine oder mehrere eine Öffnung (1B) aufweisen, sowie fünf oder weniger geschlossene Seitenwände, die Sollbruchstellen (1D) in Form von Einschnitten, Perforationen oder Wandverdünnungen aufweisen, welche durch Eindrücken, Einschlagen oder Einschneiden das Herausnehmen eines Seitenwandteiles beliebiger Form und Größe entsprechend den vorhandenen Sollbruchstellen ermöglichen;
zwölf Kanten (3), die leicht abgerundet ausgebildet sind;
zwölf Schlitze (2), Rund-oder Langlöcher, die mittig in den Kanten verlaufen und gleiche Länge besitzen;
ein oder mehrere Verbindungselemente (B1) zur Kombination mehrerer Pflanzenbehälter.

Fig. 7

EP 0 260 589 A1

## Kombinations-Pflanzenbehälter

Die Erfindung bezieht sich auf einen Kombinations-Pflanzenbehälter.

Herkömmliche Pflanzenbehälter (z.B. Balkonkästen, Kunststoffpflanzenkübel, Betonpflanzenkübel etc.) können entsprechend ihrer Zweckbestimmung nur sehr einseitig genutzt werden. Sie sind nicht miteinander kombinierbar und können nur als Einzelstücke eingesetzt werden. Ein Aufbau zu homogenen Pflanzenlandschaften oder das Zusammensetzen zu größeren Pflanzenbehältern veränderbarer Größe ist nicht möglich. Darüber hinaus ist die Veränderung einer einmal durchgeführten Begrünungsmaßnahme nur mit erheblichem Arbeitsaufwand und mit dem Verlust zahlreicher Pflanzen zu realisieren. In Gebieten mit starkem Verkehrsaufkommen (Stadtzentren, Ausfahrtstraßen etc.) und in klimatisch rauhen Zonen (Seebäder, Höhenluftkurorte etc.) wachsen in Kübeln gesetzte Pflanzen aufgrund der vorherrschenden Umweltbedingungen zudem nur schwer an und entwickeln sich innerhalb der Vegetationsperiode nur sehr unterdurchschnittlich, da der Umpflanzungsschock zu einer Wachstumsunterbrechung führt.

Deshalb bleiben die Pflanzen meistens klein und unansehnlich. Die entwickelte Biomasse steht in den meisten Fällen in einem krassen Mißverhältnis zu den überdimensionierten und zumeist auch unansehnlichen Pflanzenkübeln.

Somit liegt der Erfindung die Aufgabe zugrunde, einen Pflanzenbehälter zu schaffen,
-der aufgrund seiner konstruktiven Merkmale an allen Seiten und in alle Richtungen mit Pflanzenbehältern gleicher Art verbunden werden kann;
-der als Bauelement für Pflanzenlandschaften, Pflanzenkübel, Lärmschutzmauern etc. verwendet werden kann,
-der den Neuaufbau oder die Veränderung von Pflanzenlandschaften ermöglicht, ohne hierbei die Pflanzen umpflanzen zu müssen,
-der aufgrund seiner konstruktiven Merkmale die gleichmäßige Durchfeuchtung und Bewässerung aller horizontal und vertikal angeordneten Pflanzenbehälter gewährleistet.

Diese Aufgabe wird durch den Kennzeichnungsteil gemäß Anspruch 1 gelöst.

Zur Lösung dieser umfassenden Aufgabenstellung ist neben dem Pflanzenbehälter ein Verbindungselement und ggf. eine Stabilisierungsschiene erforderlich. Alle drei Elemente können aus Kunststoff oder kunststoffbeschichtetem Metall gefertigt sein und sollte in ihren Abmessungen exakt aufeinander abgestimmt sein.

Der erfindungsgemäße Kombinations-Pflanzenbehälter ist als Bauelement für den Aufbau beliebig großer Pflanzenland schaften und für die Erstellung von Pflanzenbehältern jeglicher Art und Größe geeignet. Mit Hilfe spezieller Verbindungsclips oder Bewässerungselementen können die Kombinationspflanzenbehälter an allen Seiten und in alle Richtungen (Länge, Höhe Tiefe) miteinander verbunden werden, wobei ggf. durch zusätzliches Einschieben von speziellen Stabilisierungsschienen bei großen Gebilden (z.B. Lärmschutzmauern, Pflanzenbehältern für Bäume etc.) jede gewünschte statische Festigkeit erreicht wird.

Erfindungsgemäß wird also vorgesehen, daß
-der Pflanzenbehälter einem Würfel mit sechs gleichgroßen quadratischen Seitenwänden gleicht,
-alle Seitenwände rechtwinklig zueinander angeordnet sind,
-die Kanten des Pflanzenbehälters keine scharfen Ecken bilden, sondern abgerundet sind,
-mindestens eine oder mehrere, ggf. alle Seitenwände des Pflanzenbehälters eine Öffnung besitzen,
-fünf oder weniger geschlossene Seiten des Pflanzenbehälters durch Einschnitte, Perforationen oder Wandverdünnungen Sollbruchstellen aufweisen, durch deren Eindrücken, Einschlagen oder Einschneiden das Herausnehmen eines Seitenwandteiles beliebiger Form und Größe entsprechend den vorhandenen Sollbruchstellen ermöglicht wird,
-alle zwölf Kanten des Pflanzenbehälters jeweils in ihrer Mitte bezogen auf die Länge der Kanten einen Schlitz haben,
-die Kantenschlitze der Aufnahme eines Verbindungselementes dienen, der so nebeneinander oder übereinander angeordnete Pflanzenbehälter zusammenklammert.

Es dürfte einleuchten, daß auf geschlossene Seitenflächen mit Sollbruchstellen ganz verzichtet werden kann, wenn von vornherein alle Seitenwände entsprechende Öffnungen aufweisen. Dieses gilt insbesondere für größere Pflanzgefäße, bei denen aufgrund der größeren Wandstärke ein Aufschneiden an den Sollbruchstellen schwierig ist.

Weitere Vorteile und Merkmale ergeben sich aus den Unteransprüchen, die einzeln oder auch gemeinsam mit dem Hauptanspruch von erfindungsgemäßer Bedeutung sein können, wobei die Angaben zur Dimensionierung die gewünschten Eigenschaften erzielen.

Vorteilhafterweise wird ein U-förmiger Verbindungsclip eingesetzt, der dadurch gekennzeichnet ist, daß
-die Länge der Verbindungsclips um einen Millimeter unter der Länge der Kantenschlitze liegt, so daß die Verbindungsclips leicht in die Kantenschlitze eingeschoben werden können und trotzdem nur ein geringes Spiel in der Länge darin haben,

-die Schenkel des Verbindungsclips zunächst von Rücken aus konisch aufeinander zulaufen, bis sie einander berühren und dann wieder auseinanderlaufen, bis sie nach einer Strecke von 1 - 10 mm an ihrem Ende an ihren Innenseiten mindestens so weit voneinander entfernt sind, wie die doppelte Wandstärke des Pflanzenbehälters ausmacht,

-die Schenkel der Verbindungsclips eine Gesamtlänge haben, die sich nach der Größe der Pflanzenbehälter richtet und die zwischen 5 und 95 % der einzelnen Kantenlänge beträgt,

-die Entfernung der Innenseiten der Schenkel zueinander am Rücken am größten ist und dort mindestens das 2 -fache der Wandstärke der Pflanzenbehälter beträgt,

-bei Verwendung der Stabilisierungsschiene die gleichen Verbindungsclips genutzt werden, die lediglich in ihrer Länge auf die Länge der senkrechten Einschnitte in der Stabilisierungsschiene so abgestimmt sind, daß sie um ca. 1 mm kürzer sind als die senkrechten Einschnitte in der Stabilisierungsschiene

-die Verbindungsclips materialmäßig so beschaffen sind, daß die Klemmkraft an den Berührungspunkten der Schenkel ausreicht, um zwei Pflanzenbehälter mit zwei Verbindungsclips auf leichte Druckspannung zusammenzuklammern.

Einen weiteren Vorteil bringt die rechteckige Stabilisierungsschiene mit sich, die dadurch gekennzeichnet ist, daß

-die Stärke (Höhe und Tiefe) auf die Abmessungen der Kantenschlitze in den Pflanzenbehältern abgestimmt ist und in Höhe und Tiefe jeweils geringfügig kleiner ist als die Kantenschlitze in den Pflanzenbehältern,

-die Länge sich nach der Anzahl der in einer Linie befindlichen vertikal oder horizontal angeordneten Pflanzenbehälter richtet und sich aus der Anzahl der Pflanzenbehälter in einer Linie multipliziert mit der Kantenlänge des Pflanzenbehälters in cm errechnet,

-sich in der Mitte zwischen Unter-und Oberkante in regelmäßigen Abständen senkrechte rechteckige Einschnitte befinden, deren Höhe 10 - 90 % der Höhe der Stabilisierungsschiene ausmacht und deren Breite der Gesamtbreite der Einschnitte der Kantenschlitze in eine Seitenwand des Pflanzenbehälters entspricht,

-die Einschnitte so angeordnet sind, daß die sich nach dem Einschieben der Stabilisierungsschiene in die Pflanzenbehälter in ihrer Breite mit den Kantenschlitzen der Pflanzenbehälter 100 %ig decken, wenn Anfang und Ende der Stabilisierungsschiene exakt mit den Pflanzenbehältern abschließen.

Im folgenden sind bevorzugte Ausführungsformen anhand von Zeichnungen näher erläutert.

Es zeigt:

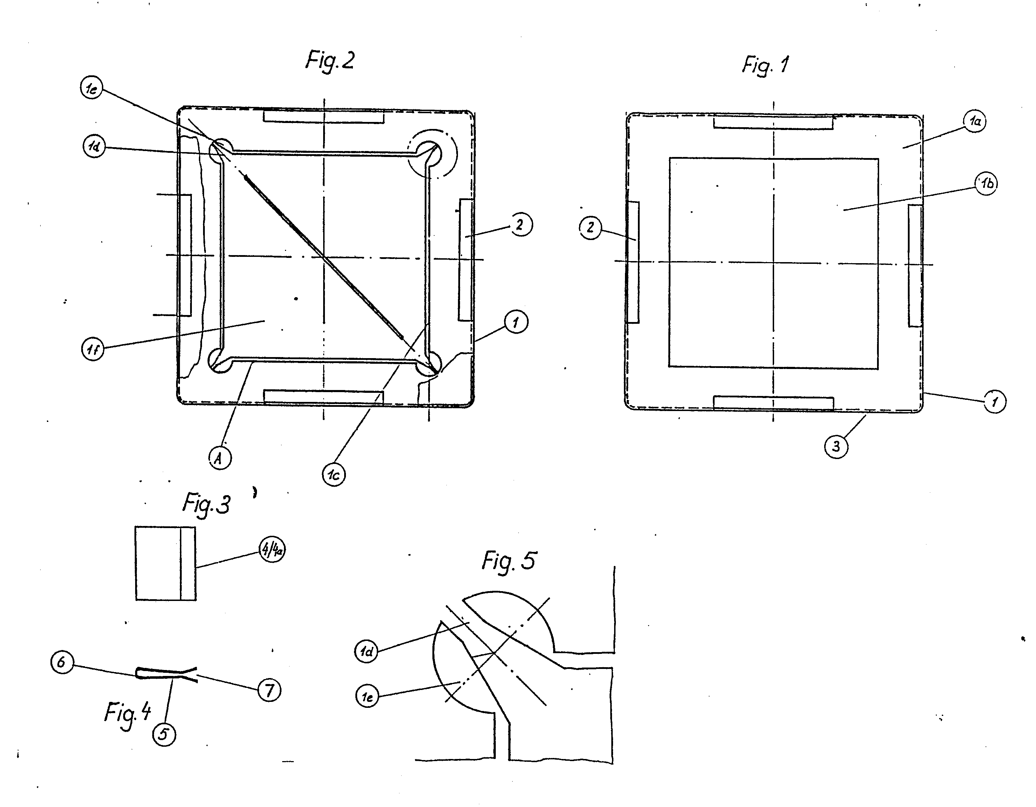

Fig. 1 eine Draufsicht auf einen erfindungsgemäßen Kombinations-Pflanzenbehälter mit Öffnung;

Fig. 2 eine Seitenansicht eines erfindungsgemäßen Kombinations-Pflanzenbehälter mit Einschnitten für eine Öffnung;

Fig. 3 eine Draufsicht eines Verbindungsclips;

Fig. 4 einen Schnitt durch den Verbindungsclip der Fig. 3;

Fig. 5 eine schematische Seitenansicht einer Sollbruchstelle;

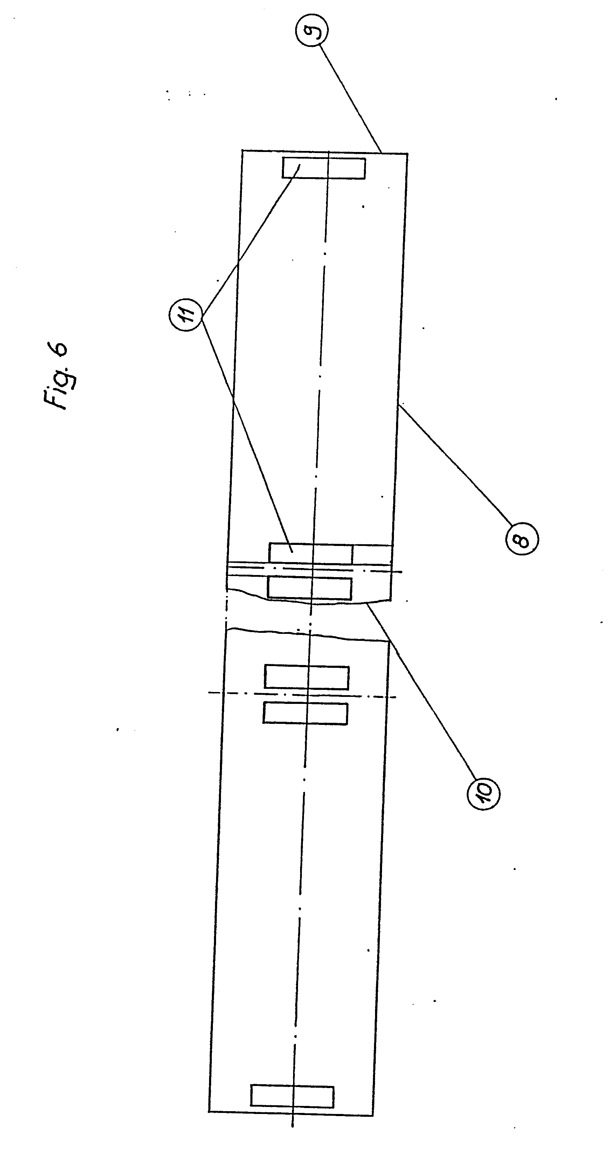

Fig. 6 eine Draufsicht auf eine Stabilisierungsschiene;

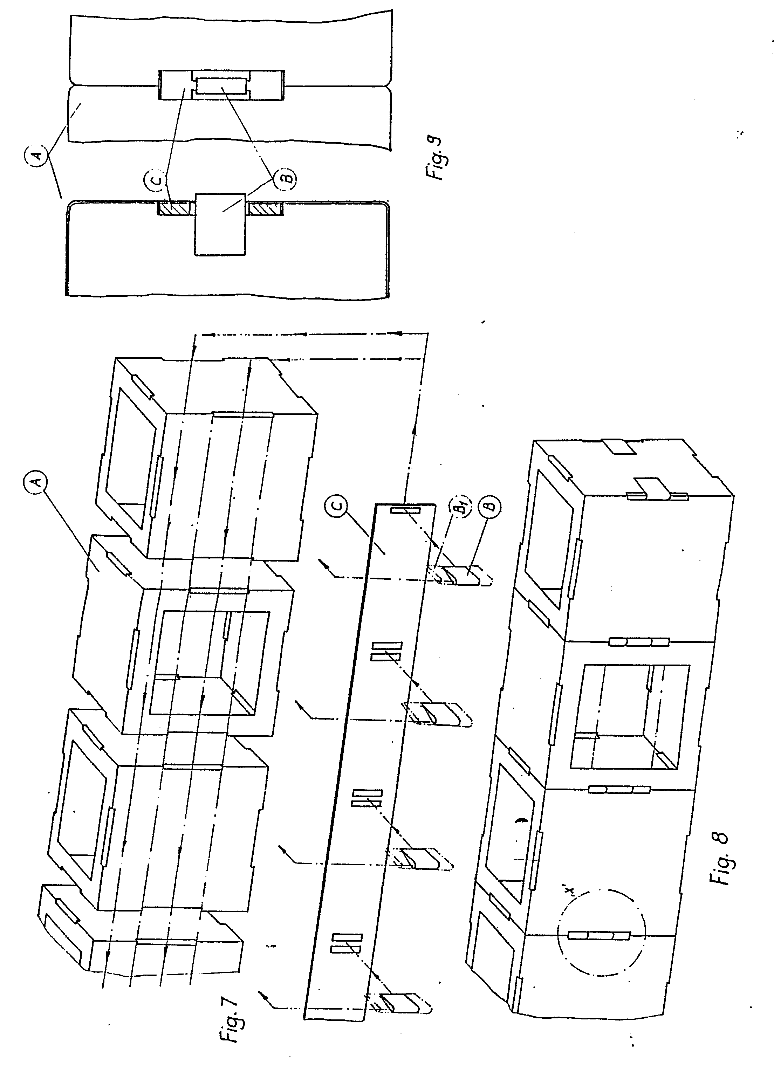

Fig. 7 eine schematische Darstellung des Zusammenbaus mehrerer Kombinations-Pflanzenbehälter und eine Stabilisierungsschiene;

Fig. 8 eine perspektivische Ansicht mehrerer verbundener Kombinations-Pflanzenbehälter mit eingebauter Schiene;

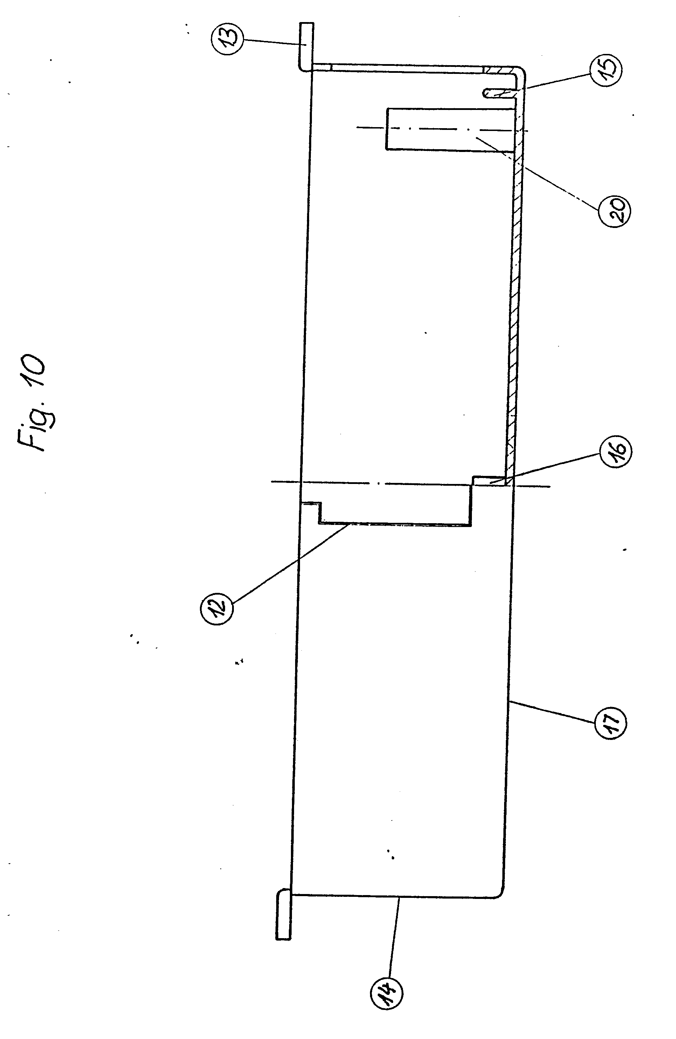

Fig. 9 eine Ausschnittsdarstellung von zwei durch Verbindungsclip und -schiene verbundene Kombinations-Pflanzenbehälter;

Fig. 10 eine teilweise geschnittene Vorderansicht eines Bewässerungselementes;

Fig. 11 eine Seitenansicht des Bewässerungselementes der Fig. 10;

Fig. 12 eine Draufsicht auf das Bewässerungselement der Fig. 10 und 11;

Fig. 13 eine Ansicht einer Dichtung zur Anordnung zwischen den Behältern;

Fig. 14 eine Ansicht einer Verschlußplatte;

Fig. 15 einen Schnitt durch ein Bewässerungselement mit angedeutetem Behälter, das mit einem anderen Bewässerungselement in Verbindung steht;

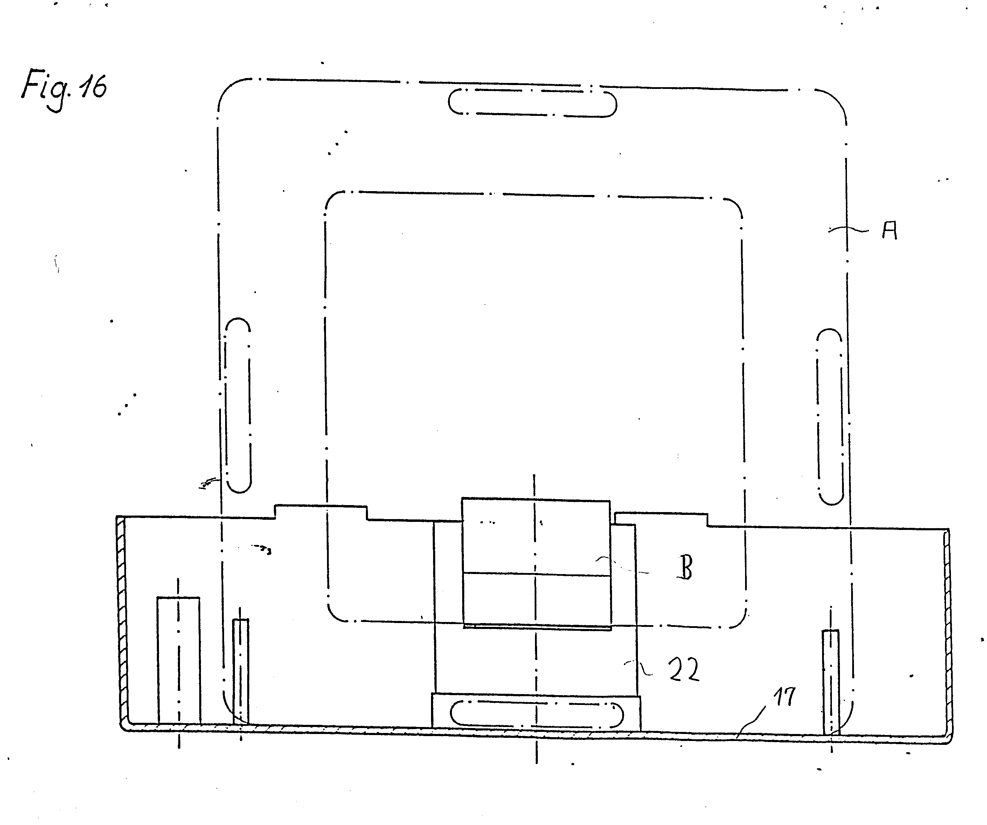

Fig. 16 einen der Fig. 15 entsprechenden Schnitt, jedoch als Endstück mit Verschlußplatte; und

Fig. 17 einen Schnitt durch zwei miteinander verbundene Bewässerungselemente mit strichpunktiert angedeuteten Behältern.

Ein Ausführungsbeispiel eines erfindungsgemäßen Kombinations-Pflanzenbehälters weist folgende Abmessungen auf:

Stirn-und Seitenwände     (1) 150 mm x 150 mm x 1,5 mm

Boden    (1) 150 mm x 150 mm x 1 mm

Deckelrand    (1a) 25 mm breit

Einschnitt, Perforationen oder Hautverdünnungen    (1c) Länge 100 mm, Breite ca.    1 - 2 mm

Sollbruchstelle, Bruchkante    (1d) ca. 2 - 4 mm breit

Kanäle für Sollbruchstellen      (1e) max. 7 mm Breite max. 10 mm Tiefe
Seitenwandteil (1f) ca. 100 x 100 mm
Deckelöffnung (1b) 100 x 100 mm
Kantenschlitze (2) Länge 40 mm Breite ab
Innenkante Seitenwand 5 mm
Kanten (3) R 2mm / Länge 150 mm

Der Verbindungsclip (B, B1) besitzt folgende Abmessungen:
Breite (4, 4a) 19 mm / 39 mm
Schenkel (5) Länge ca. 15 mm
Rückenbreite an den Schenkelinnenseiten (6) ca 3 mm
Schenkelöffnung an den Innenseiten am Schenkelende (7) ca. 30°

Die Stabilisierungsschiene (C) besitzt folgende Abmessungen:
Länge (8) variabel
Höhe (9) 39 mm,
Tiefe (10) 4 mm
Einschnitte (11) Höhe 20 mm Breite 5 mm

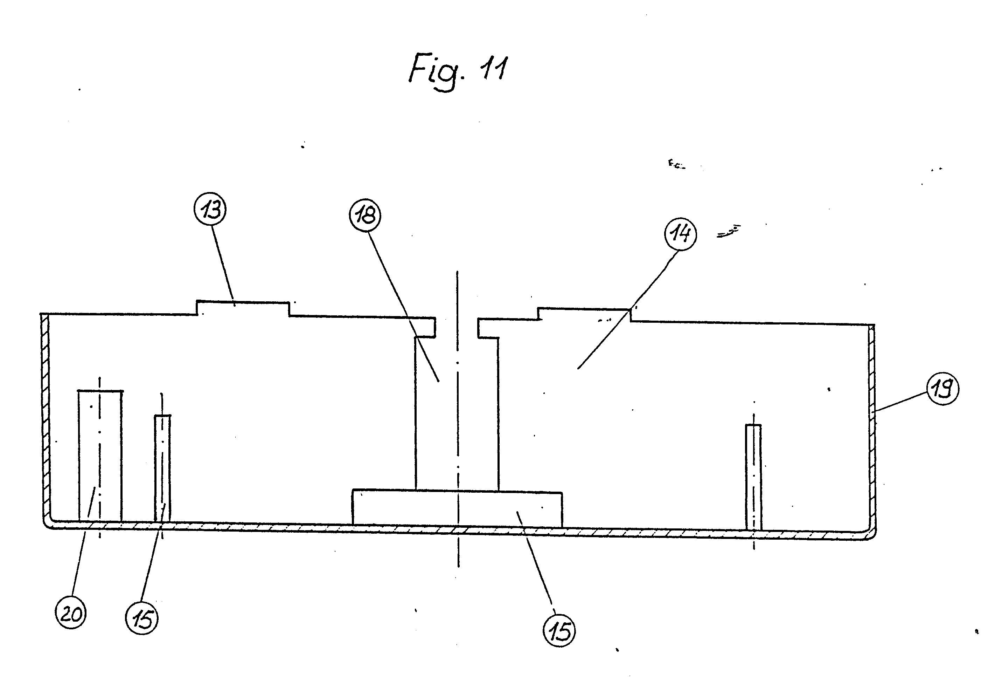

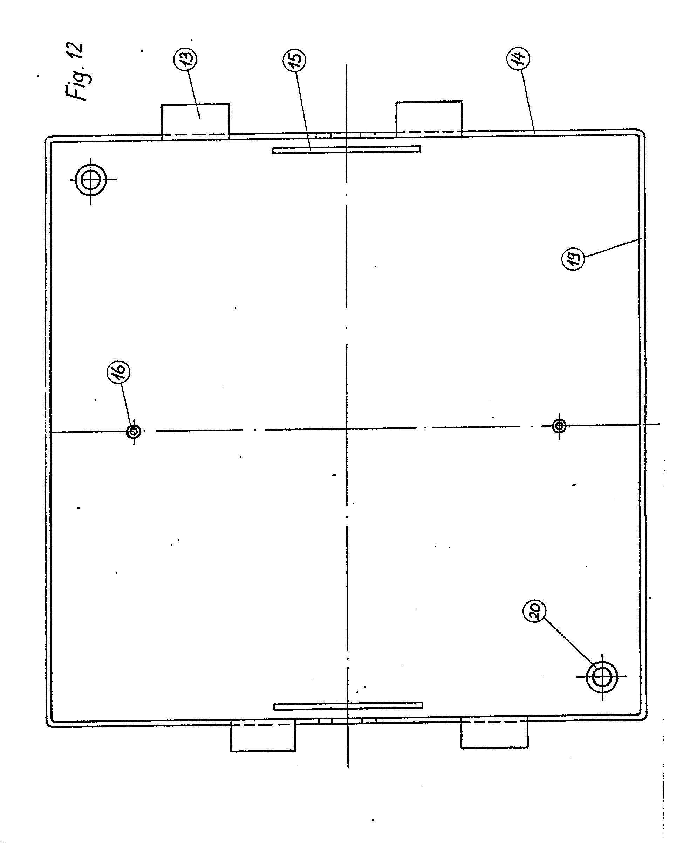

Das Bewässerungselement (Figuren 10 - 12) besitzt folgende Abmessungen:
Stirnwände mit Verbindungsöffnung (14) 200 mm x 50 mm x 2 mm
Seitenwände mit Sollbruchstelle (19) 200 mm x 50 mm x 2 mm
Sollbruchstellenmaterialverdünnung in Seitenwand (12) 1 mm tief 1 mm breit
Haltelaschen (13) 22 mm x 10 mm ab Außenkante
Haltestrebe (15) 50 mm x 10 mm x 2 mm
Fixierungszylinder für Pflanzgefäße (16) Außendurchmesser 4,5 mm hohler Innendurchmesser 2,0 mm Höhe 25 mm
Boden (17) 200 mm x 200 mm x 2 mm
Verbindungsöffnung (18) 5 mm x 10 mm anschließend 35 mm x 20 mm
Sicherungszylinder (20) Außendurchmesser 10 mm hohler Innendurchmesser 6 mm Höhe 35 mm

### Beschreibung des erfindungsgemäßen Pflanzenbehälters

Die gleich großen quadratischen Stirn-(1) und Seitenwände (1) des Pflanzenbehälters sind je gegenüberliegend angeordnet und bilden einen rechteckigen Behälter. Rechtwinklig dazu angeordnet ist die ebenfalls gleich große quadratische Bodenplatte (1) und der der Bodenplatte gegenüberliegende ebenfalls quadratische teiloffene Deckel (1a + 1b). Bodenplatte (1) und Deckel (1a + 1b) schließen jeweils mit der Unterkante bzw. Oberkante Der Stirn-(1) und Seitenwände (1) ab. Die Öffnung (1b) des teiloffenen Deckels (1a + 1b) ist quadratisch und liegt genau in der Mitte. Die Öffnung (1b) ist in ihren Abmessungen um 10 - 30 % kleiner als die Abmessungen der Wände (1), so daß zu allen vier angrenzenden Seitenwänden (1) ein gleich großer Rand (1a) verbleibt.

So gleicht der Pflanzenbehälter einem hohlen Würfel mit jeweils fünf geschlossenen (1) und einer teiloffenen (1a + 1b) Wand. Die fünf geschlossenen Seiten (1) des Pflanzenbehälters weisen durch Einschnitte, Perforationen oder Wandstärkenverdünnungen (1c) Sollbruchstellen (1d) auf, die ein Eindrücken, Einschlagen oder Einschneiden eines Seitenwandteils (1f) beliebiger Form und Größe entsprechend den vorhandenen Sollbruchstellen (1d) ermöglichen. Bei Verwendung von Einschnitten (1c) liegen die verbleibenden Bruchkanten (1d) in Kanälen (1e), die sich in der verbleibenden Seitenwand (1a) befinden. So ist beim Eingreifen in die geschaffene Öffnung (1b) eine Berührung mit der Bruchkante (1d) ausgeschlossen. Das herausgenommene Seitenwandteil (1f) weist durch Einschnitte, Perforationen oder Wandstärkenverbindungen (1c) Sollbruchstellen (1d) auf, die eine Halbierung des herausgenommenen Seitenwandteiles (1f) ermöglichen.

Alle zwölf Kanten (3) des kubischen Pflanzenbehälters sind nicht scharf eckig, sondern leicht gerundet. In allen zwölf Kanten (3) des Pflanzenbehälters befinden sich jeweils in ihrer Mitte, bezogen auf die Länge der Kanten (3) Schlitze (2), die in jede der die Kanten (3) bildenen Seitenwände (1) je nach Größe des Pflanzenbehälters 1 mm bis 10 mm tief einschneiden. Alle zwölf Kantenschlitze (2) haben die gleiche Länge, die zwischen 10 % und 90 % einer Kantenlänge (3) des Pflanzenbehälters betragen kann. Demzufolge sind auch alle geschlossenen Kantenstücke gleich lang, so daß auch alle Entfernungen vom Beginn oder Ende des Kantenschlitzes zum nächstgelegenen Kantenende gleich lang sind.

Die Pflanzenbehälter lassen sich aufgrund ihrer Würfelform (gleich große Seiten - (1), Stirn-(1), Boden-(1) und Deckelwand (1a + 1b) in jede Richtung beliebig häufig aneinanderreihen. Die mittige Lage der Kantenschlitze (2) garantiert, daß diese bei nebeneinander, übereinander oder hintereinander aufgereihten Pflanzenbehältern stets exakt nebeneinander liegen, so daß sich die u-förmigen Verbindungsclips (B1) einschieben lassen, die so die Seitenwand (1) eines Pflanzenbehälters und die Seitenwand des daneben befindlichen Pflanzenbehälters zusammenklammern. Durch Einschieben der Verbindungsclips (B1) in alle vier mal zwei nebeneinander befindlichen Kantenschlitze beider Pflanzenbehälter wird eine hohe Verbindungsfestigkeit erreicht.

Eine noch höhere statische Festigkeit wird durch Einschieben einer Stabilisierungsschiene erreicht. Diese verläuft nach dem Durchschieben der Stabilisierungsschiene durch die Kantenschlitze (2) an der Innenseite einer Seitenwand (1) parallel zu dieser. Nebeneinander, hintereinander oder übereinander an geordnete Pflanzenbehälter sind auf dieser Stabilisierungsschiene aufgereiht wie Perlen auf einer Perlenschnur. Die Einschnitte (11) der Stabilisierungsschiene decken sich mit den Kantenschlitzen (2) der Pflanzenbehälter und dienen ebenfalls der Aufnahme von Verbindungsclips (B).

So können die Pflanzenbehälter als Bauelemente für Pflanzenlandschaften oder als Bausteine für Pflanzenbehälter beliebiger Art oder Größe verwendet werden, wobei je nach Erfordernis der statischen Festigkeit entweder die Verbindungsclips oder aber Stabilisierungsschiene und Verbindungsclips als Verbindungselemente dienen.

Beschreibung des Verbindungsclips

Im Zussammenhang mit dem Pflanzenbehälter dient der Verbindungsclip (B1) der Verbindung von Pflanzenbehältern gleicher Art. Er gleicht einem U, des Schenkel (5) vom Rücken aus konisch aufeinander zulaufen und nach dem Berührungspunkt wieder auseinanderlaufen. Die Breite (4a) des Verbindungsclips (B1) liegt geringfügig unter der Länge des Kantenschlitzes (2), so daß er leicht in die Kantenschlitze (2) eingeschoben werden kann und trotzdem nur ein geringes Spiel mit seiner Breite (4a) darin hat. Die Schenkel (5) des Verbindungsclips (B,B1) haben eine Gesamtlänge, die sich nach der Größe des Pflanzenbehälters richtet und die zwischen 5% und 95% der einzelnen Kantenlänge eines Pflanzenbehälters beträgt. Die Schenkel (5) des Verbindungs clips laufen vom Rücken (6) aus konisch aufeinander zu, bis sie einander berühren. Anschließend laufen sie wieder konisch auseinander, bis sie nach einer Strecke von 1mm bis 10 mm an ihrem Ende an ihren Innenseiten mindestens soweit voneinander entfernt sind, wie die doppelte Wandstärke des Pflanzenbehälters ausmacht. Die Entfernung der Innenseiten der Schenkel (5) ist am Rücken am größten und beträgt dort mindestens das Zweieinhalbfache der Wandstärke des Pflanzenbehälters.
Bei Verwendung der Stabilisierungsschiene werden die gleichen Verbindungsclips (B) genutzt, die lediglich in ihrer Breite (4) auf die Länge der senkrechten Einschnitte (11) in der Stabilisierungsschiene so abgestimmt sind, daß sie geringfügig kürzer sind als die senkrechten Einschnitte (11) in der Stabilisierungsschiene.

Materialmäßig sind die Verbindungsclips so beschaffen, daß die Klemmkraft an den Berührungspunkten ihrer Schenkel (5) ausreicht, um zwei Pflanzenbehälger mit jeweils gegenüberliegend eingeschobenen Verbindungsclips auf leichte Druckspannung zusammenzuklammern. Die Pflanzenbehälter werden dadurch stabil miteinander verbunden,daß in die Kantenschlitze (2) der nebeneinander befindlichen Pflanzenbehälter der Verbindungsclip bis zu seinem Rücken so eingeschoben wird, daß der eine Schenkel (5) an der Innenseite des einen Pflanzenbehälters und der andere Schenkel an der Innseite des anderen Pflanzenbehälters verläuft.

Beschreibung des Bewässerungselementes

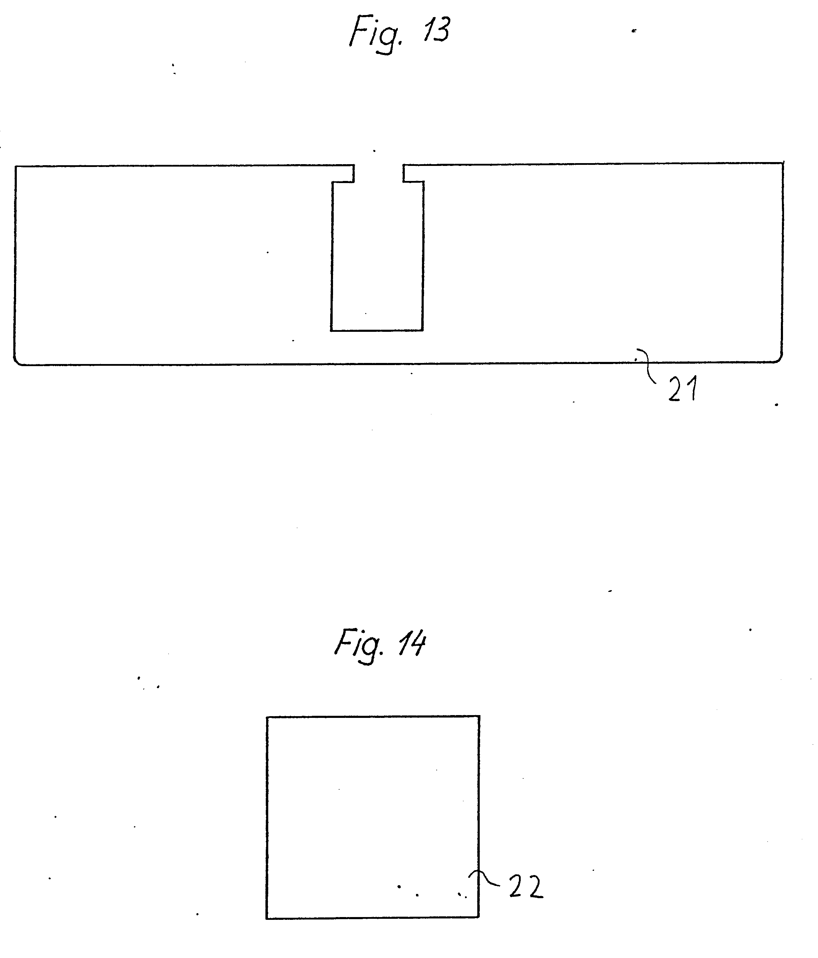

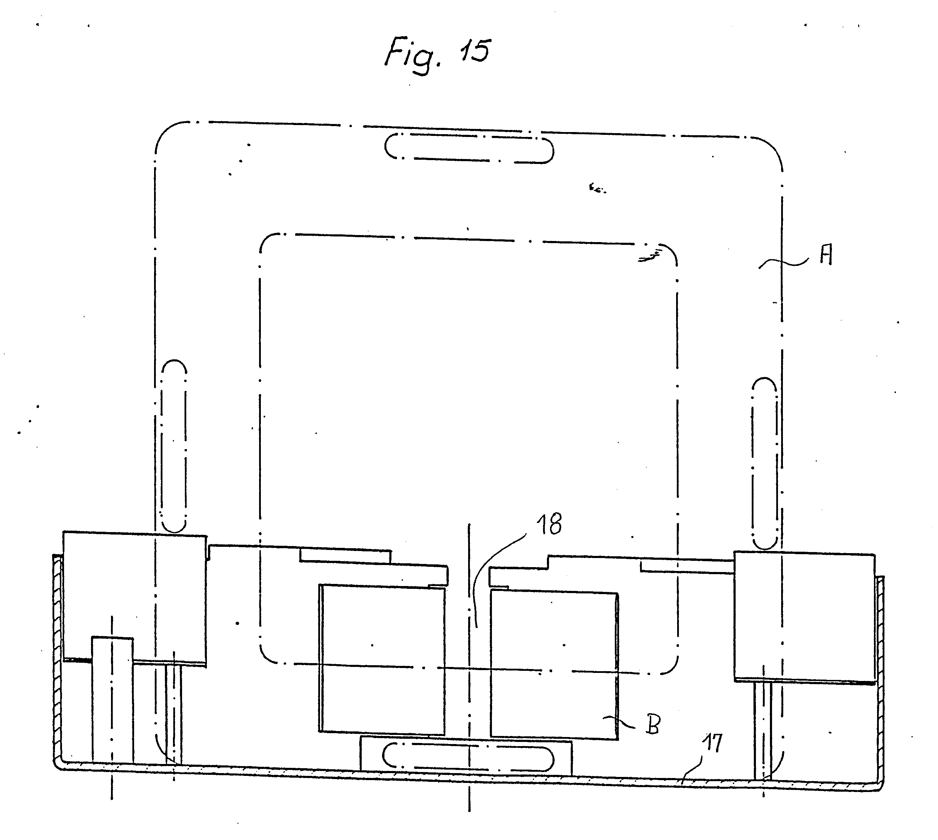

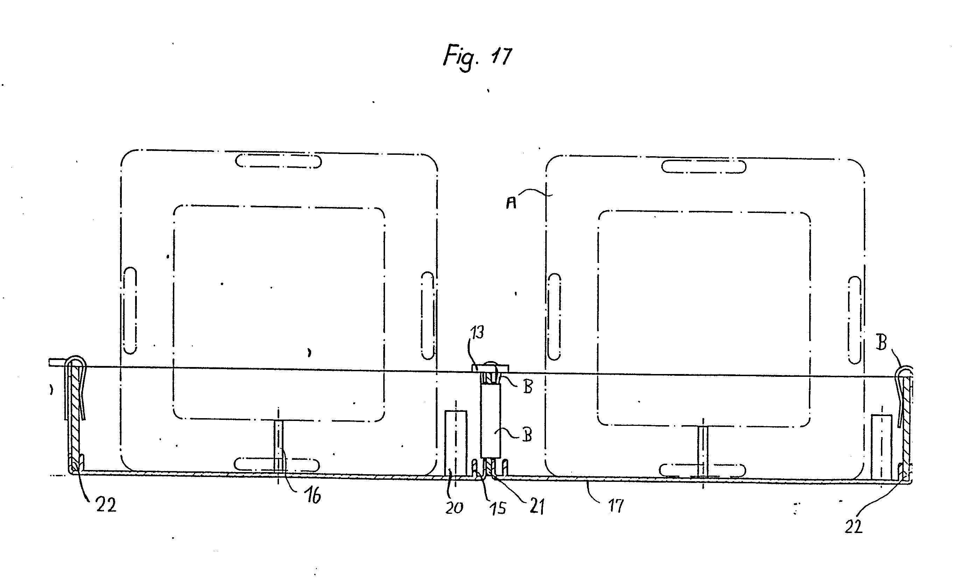

Das Bewässerungselement dient sowohl der Bewässerung des in ihm stehenden Kombinations-Pflanzgefässes als auch der wackelfesten Verbindung der Pflanzenbehälter. Bei Verwendung des Bewässerungselementes werden nicht mehr die Pflanzenbehälter selbst sondern die Bewässerungselemente mit den Verbindungsclips verbunden (Fig. 15 und 17). Das Bewässerungselement gleicht einem quadratischen, nach oben offenen Gefäß mit jeweils gegenüberliegenden Stirn-(14) und Seitenwänden (19). Beide Seitenwände (19) haben in der Mitte Sollbruchstellen (12), die das Herausschneiden eines Seitenwandteiles ermöglichen. Beide Stirnwände (14) haben in ihrer Mitte eine Öffnung (18), die identisch mit der Öffnung ist, die nach dem Ausschneiden der Sollbruchstellen (12) in den Seitenwänden (19) entsteht. Die Öffnung (18) beginnt mit einem senkrechten Schlitz von ca. 10 mm Breite, der sich nach ca. 5 mm rechtwinklig auf ca. 20 mm verbreitert. Dieser ca. 20 mm breite Schlitze endet ca. 10 mm oberhalb der Bodenplatte (17). Die Öffnung (18) in der Stirnwand dient sowohl der Aufnahme der Verbindungsclips zur Verbindung der Bewässerungselemente als auch dem Wasserfluß von einem Bewässerungselement in das nächste. Die gleiche Funktion erfüllt eine an den Sollbruchstellen (12) erfolgte Seitenwandöffnung. Parallel zur Stirnwand (14) verläuft in einem Abstand von ca. 3 mm zur Stirnwand (14) auf dem Boden (17) eine Haltestrebe (15), die eine Höhe von 10 mm und eine Länge von ca. 50 mm hat. Sie liegt in der Mitte der Stirnwand und dient der Anpressung der Verschlußplatte (Figur 14), wenn die Verbindungsöffnung verschlossen werden soll. Auf der Mittelachse der Seitenwände, von der Bodenplatte ausgehend, befinden sich zwei Fixierungszylinder (16), die einen Abstand von 15 cm zueinander haben, so daß sie exakt in zwei gegenüberliegende untere Kantenschlitze der Pflanzgefäße passen. Sie verhindern ein Vorwärts-oder Rückwärtsverrutschen der eingesetzten Pflanzenbehälter. So eingesetzte Pflanzenbehälter können dann nur noch seitlich im Rahmen der Kantenschlitzlänge bewegt werden. Die Fixierungszylinder (16) sind hohl, so daß durch Durchstecken von Stiften eine Verbindung des oberen Pflanzgefäßes mit den darunterliegenden erfolgen kann. Ebenfalls von der Bodenplatte (17) ausgehend befinden sich im rechten Winkel von Stirn-(14) und Seitenwand (19) diagonal gegenüberliegend zwei Sicherungszylinder (20). Ein durch diese rohrförmigen Sicherungszylinder (20) geführter Stift verbindet alle übereinander angeordneten Bewässerungselemente und sichert diese gegen Verrutschen. An den Stirnseiten (14) befinden sich je zwei Haltelaschen (13), die rechtwinklig nach außen abgekantet sind. Diese Haltelaschen (13) sind gegenüberliegend so versetzt angeordnet, daß die Haltelaschne (13) des einen Bewässerungselementes auf der Stirnwand neben den Haltelaschen des anderen Bewässerungselementes aufliegen und so freischwebende Bewässerungselemente gegen ein Rutschen nach unten zusätzlich absichern.

In Fig. 13 ist eine Dichtung 21 zur Anordnung zwischen zwei Bewässerungselementen (siehe Fig. 17) dargestellt. In Fig. 14 ist eine Verschlußplatte 22 zum Verschließen eines Bewässerungselementes am Ende (siehe Fig. 17) dargestellt.

Beschreibung der Stabilisierungsschiene

Die Stabilisierungsschiene ist ein rechteckiger Stab, dessen Höhe (9) und Tiefe (10) auf die Abmessungen der Kantenschlitze (2) in den Pflanzenbehältern abgestimmt ist und der in diesen Abmessungen geringfügig kleiner ist als die Kantenschlitze in den Pflanzenbehältern. Seine Länge (8) richtet sich nach der Anzahl der in einer Linie befindlichen vertikal oder horizontal angeordneten Pflanzenbehälter und entspricht jeweils exakt der Anzahl der Pflanzenbehälter multipliziert mit einer Kantenlänge. Jeweils in der Mitte zwischen Unter-und Oberkante der Stabilisierungsschiene befinden sich in regelmäßigen Abständen senkrechte rechteckige Einschnitte (11), deren Höhe zwischen 10% und 90% der Höhe der Stabilisierungsschiene ausmacht. Die Breite der senkrechten rechteckigen Einschnitte (11) auf der Stabilisierungsschiene entspricht der Gesamtbreite der Einschnitte der Kantenschlitze (2) in eine Seitenwand .(1) des Pflanzenbehälters, und zwar gemessen von der Innenkante der anderen Seitenwand. Die Abstände der Einschnitte (11) zueinander sind so angeordnet, daß sie sich nach dem Einschieben der Stabilisierungsschiene in die Pflanzenbehälter in ihrer Breite mit den Kantenschlitzen (2) der Pflanzenbehälter hundertprozentig decken, wenn Anfang und Ende der Stabilisierungsschiene exakt mit den Pflanzenbehältern abschließen.

Die Stabilisierungsschiene findet überall dort Verwendung, wo es auf hohe statische Festigkeit der miteinander verbundenen Pflanzenbehälter ankommt. Dieser Fall kann insbesondere bei Lärmschutzmauern und bei der Erstellung von größeren Pflanzenbehältern, z. B. für Bäume, auftreten. Die Stabilisierungsschiene kann in jeden der zwölf Kantenschlitze eines Pflanzenbehälters eingeschoben werden. Sie tritt am gegenüberliegenden Kantenschlitz (2) der gleichen Seitenwand (1) wieder aus und dringt in den Kantenschlitz (2) des daneben befindlichen Pflanzenbehälters ein. Sie verläuft an den Innenseiten der Seitenwände (1) der Pflanzenbehälter und reiht diese wie Perlen auf einer Perlenschnur auf. Sie schließt mit Anfang und Ende der aufgereihten Pflanzenbehälter ab und hat also exakt die Länge derselben. Die Einschnitte (11) in der Stabilisierungsschiene decken sich in ihrer Breite exakt mit der Breite der Kantenschlitze (2). In ihrer Höhe liegen sie etwa in der Mitte der Kantenschlitze (2). Jetzt können die Verbindungsclips (B) eingeschoben werden und so jeweils zwei Pflanzenbehälter und die Stabilisierungsschiene miteinander verbinden. So sind also die beiden aneinandergrenzenden Seitenwände eines Pflanzenbehälters und die Stabilisierungsschiene zusammengeklammert.

Anwendung, Wirkungsweise und Nutzen der Erfindung sind am Beispiel einer Pflanzenlandschaft, die durch horizontales und vertikales Aneinanderfügen bepflanzter und unbepflanzter Kombinations-Pflanzenbehälter .entsteht, nachvollziehbar.

Die horizontale Ausdehnungsmöglichkeit ist unbegrenzt während der vertikale Aufbau bis zu mehreren Metern Höhe statisch unbedenklich ist, da die Pflanzenbehälter durch die Füllung mit Erde und durch die spätere Durchwurzelung der Pflanzenbehälter in den Kantenschlitzbereichen zusätzliche Festigkeit erhalten. Auf Grund der konstruktiven Merkmale der Kombinations-Pflanzenbehälter ist praktisch jede gewünschte Form von Pflanzenlandschaften oder Pflanzenbehältern (z.B. Turm, Terrasse, Pyramide, Hügelfläche, Mauer, etc.) realisierbar, so daß sich insbesondere bei Stadtbegrünungsmaßnahmen jede gewünschte Begrünungsform durchführen läßt, da die Einstellung auf schwierige Geländeverhältnisse unproblematisch ist.

Die Integrationsmöglichkeit von Kompostierungen und der Verzicht auf Umpflanzung ermöglicht die Begrünung von Problemzonen, in denen Pflanzen in herkömmlichen Pflanzenbehältern nicht mehr anwachsen. Darüberhinaus können bei Begrünungsmaßnahmen mit Kombinations-Pflanzenbehältern die Pflanzen so angeordnet werden, daß die Pflanzenbehälter durch die Pflanzen fast vollständig verdeckt werden. Bei Pflanzgefäßen für Bäume können die Wände des Pflanzgefäßes bepflanzt werden bzw. an die Wände können bepflanzte Kombinations-Pflanzenbehälter angesetzt werden, so daß auch die Wände des Baumkübels vollständig begrünt werden können.

Vorteilszusammenfassung:

-der optische Effekt

Da die Pflanzenbehälter durch Pflanzen vollständig verdeckt werden können ergibt sich ein hübscherer Anblick als auf nackte Beton-oder Kunststoffkübel. Die Zusammenfassung von Pflanzen zu größeren Biomasseeinheiten ist optisch weitaus wirkungs voller als die Anpflanzung mehrerer kleinerer Pflanzengruppen in mehreren Pflanzbehältnissen.

-die Flexibilität bei Begrünungsmaßnahmen

Das problemlose Zusammenfügen der Kombinations-Pflanzenbehälter zu Einheiten beliebiger Form und Größe ermöglicht die Begrünung praktisch aller Gegebenheiten. Anpassungen an veränderte Umstände (Verkleinerung, Vergrößerung, Formveränderung etc.) sind ohne Umpflanzungsmaßnahmen oder Gestellung anderer Pflanzenkübel durchführbar.

-die Wachstumsbedingungen

Der Verzicht auf Umpflanzung (die Pflanzen werden bereits in den Kombinations-Pflanzenbehältern gezogen) und die Möglichkeit zur Integration von Kompostierungsanlagen schaffen optimale Wachstumsvoraussetzungen und ermöglichen so die Begrünung von stark belasteten oder klimatisch rauhen Gebieten.

-die Kosten von Begrünungsmaßnahmen

Die Verwendung nur einer einzigen Art von Bepflanzungsbehälter ermöglicht die kostengünstige Großserienfertigung und reduziert damit den Kostenaufwand für Pflanzenkübel erheblich. Durch Verwendung vieler kleiner Pflanzen kann mit kostengünstiger Biomasse der gleiche Begrünungseffekt erzielt werden wie mit teuren Großpflanzen. Installationsaufwand, Pflege und Änderungsaufwand liegen auch hinsichtlich der Arbeitszeit erheblich unter dem Aufwand, der bei Verwendung herkömmlicher Pflanzenbehälter betrieben werden muß.

-der Hobbyeffekt

Die große Pflanzenanzahl auf kleinstem Raum eröffnet dem Hobbygärtner neue Perspektiven hinsichtlich Pflanzenvielfalt und -menge. Schon auf dem kleinsten Stadtwohnungsbalkon kann Artenreichtum und Umfang eines Kleingarten kultiviert werden.

-die Mobilität

Der schnelle Auf-, Um-und Abbau von Pflanzenlandschaften ermöglicht die kurzzeitige Begrünung z. B. von Messeveranstaltungen. Da keine Umpflanzungen mit Beeinträchtigung der Wurzelbildung erfolgen können die Pflanzen in Kombinations-Pflanzenbehältern praktisch unbegrenzt häufig für Kurzzeitbegrünungen eingesetzt werden.

**Ansprüche**

1. Kombinations-Pflanzenbehälter umfassend: eine Kubusform mit sechs Wänden (1) gleicher Größe und quadratischer Form, von denen mindestens eine oder mehrere eine Öffnung (1b) aufweisen;
fünf oder weniger geschlossene Seitenwände (1), die Sollbruchstellen in Form von Einschnitten, Perforationen oder Wandverdünnungen aufweisen, welche durch Eindrücken, Einschlagen oder Einschneiden das Herausnehmen eines Seitenwandteiles (1f) beliebiger Form und Größe entsprechend den vorhandenen Sollbruchstellen ermöglichen;
zwölf Kanten (3), die leicht abgerundet ausgebildet sind;
zwölf oder weniger Schlitze (2), Rund-oder Langlöcher, die mittig in den Kanten (3) verlaufen und gleiche Länge besitzen;
ein oder mehrere Verbindungselemente zur Kombination mehrerer Pflanzenbehälter.

2. Kombinations-Pflanzenbehälter nach Anspruch 1, dadurch gekennzeichnet, daß das Verbindungselement als Verbindungsclip (B1) und/oder als kastenförmiges Bewässerungselement (Fig. 10 - 12) ausgebildet ist.

3. Kombinations-Pflanzenbehälter nach Anspruch 2, dadurch gekennzeichnet, daß die Breite (4a) des Verbindungsclips (B1) ca. 1 mm kürzer ist als die Länge der Kantenschlitze(2) in dem Pflanzenbehälter, so daß der Verbindungsclip (B1) leicht, aber nur mit minimalem Spiel in die Kantenschlitze (2) eingeschoben werden kann
die Schenkel (5) der Verbindungsclips (B,B1) eine Länge haben, die sich nach der Größe des Pflanzenbehälters richtet und die zwischen 5 % und 95 % der einzelnen Kantenlänge eines Pflanzenbehälters beträgt
die Schenkel (5) vom Rücken aus konisch aufeinander-zu laufen, bis sie einander an den Innenseiten berühren
die Schenkel nach dem Berührungspunkt werden konisch auseinanderlaufen, bis sie nach einer Strecke von 1mm bis 10 mm an ihrem Ende an ihren Innenseiten mindestens soweit voneinander entfernt sind, wie die doppelte Wandstärke des Pflanzenbehälters ausmacht
die Entfernung der Innenseiten der Schenkel zueinander am Rücken am größten ist und dort mindestens die zweieinhalbfache Wandstärke des Pflanzenbehälters beträgt
die Breite (4) der Verbindungsclips bei Verwendung der Stabilisierungsschiene auf die Länge der senkrechten Einschnitte (11) in der Stabilisierungsschiene so abgestimmt ist, daß die Breite der Verbindungsclips um ca. 1 mm kürzer ist als die Länge der senkrechten Einschnitte in der Stabilisierungsschiene

4. Kombinations-Pflanzenbehälter nach Anspruch 2, dadurch gekennzeichnet, daß das kastenförmige Bewässerungselement in beiden Stirnwänden (14) jeweils eine Verbindungsöffnung (18) aufweist.

5. Kombinations-Pflanzenbehälter nach Anspruch 4, dadurch gekennzeichnet, daß sich die Verbindungsöffnungen (18) nach oben rechtwinklig verengen.

6. Kombinations-Pflanzenbehälter nach Anspruch 3, dadurch gekennzeichnet, daß die Seitenwände (19) Sollbruchstellen (12) aufweisen, deren Form derjenigen der Verbindungsöffnung (18) in der Stirnwand (14) angepaßt ist.

7. Kombinations-Pflanzenbehälter nach einem der vorstehenden Ansprüche 4 bis 6, dadurch gekennzeichnet, daß parallel zur Stirnwand (14) direkt vor der Verbindungsöffnung (18) auf dem Boden (17) des Bewässerungselements eine Haltestrebe (15) vorgesehen ist, die länger ist als die größte Breite der Verbindungsöffnung (18).

8. Kombinations-Pflanzenbehälter nach einem der vorstehenden Ansprüche 4 bis 7, dadurch gekennzeichnet, daß auf der Mittelachse der Seitenwände (19) vom Boden (17) ausgehende hohle Fixierungszylinder (16) vorgesehen sind.

9. Kombinations-Pflanzenbehälter nach einem der vorstehenden Ansprüche 4 bis 8, dadurch gekennzeichnet, daß vom Boden (17) ausgehende hohle Sicherungszylinder (20) vorgesehen sind.

10. Kombinations-Pflanzenbehälter nach einem der Ansprüche 4 bis 9, dadurch gekennzeichnet, daß rechtwinklig von der Stirnwand (14) nach außen abgekantete Haltelaschen (13) vorgesehen sind.

11. Kombinations-Pflanzenbehälter nach Anspruch 1 und 2, dadurch gekennzeichnet, daß statt des Kantenschlitzes ein oder mehrere Rund- oder Langlöcher parallel zu den Kanten (3) auf beiden Seiten der Kanten (3) in exakt gleicher Plazierung bei allen Kanten (3) verlaufen können
die parallel zu beiden Seiten der Kanten verlaufenden Löcher jeweils zentriert zur Kantenlänge angeordnet sind, so daß das unterste Loch zur unteren Kante und das oberste Loch zur oberen Kante die gleichen Abstände haben
die Entfernung der Löcher zur Kante zwischen 1 mm und 20 mm beträgt.

12. Kombinations-Pflanzenbehälter nach Anspruch 1, dadurch gekennzeichnet, daß das herausgenommene Seitenwandteil (1f) durch Einschnitte, Perforationen oder Wandstärkenverdünnungen (1c) Sollbruchstellen (1d) aufweist, die eine Halbierung der herausgenommenen Teilseitenwandstücke (1f) ermöglichen. Wenn die Pflanzenbehälter als Bauelemente für Pflanzenlandschaften oder als Bausteine für Pflanzenbehälter beliebiger Art oder Größe verwendet werden, wobei je nach Erfordernis der statischen Festigkeit entweder die Verbindungsclips oder aber Stabilisierungsschiene und Verbindungsclips als Verbindungselemente dienen.

Fig.2

1e
1d
1f
A
1c
2
1

Fig.3

4/4a

6
7
Fig.4
5

Fig. 1

1a
1b
2
3
1

Fig. 5

1d
1e

0 260 589

Fig. 6

0 260 589

Fig. 7

Fig. 8

Fig. 9

A

B₁

B

C

0 260 589

Fig. 10

0 260 589

# Fig. 11

0 260 589

Fig. 12

0 260 589

Fig. 13

21

Fig. 14

22

# Fig. 15

18

A

B

17

0 260 589

Fig. 16

A

B

22

17

0 260 589

*Fig. 17*

0 260 589

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,A | DE-U-8 606 169 (KROLL) <br> * Ansprüche 1-3 * <br> --- | 1-3 | A 01 G 9/02 <br> E 04 C 1/39 |
| A | US-A-4 212 134 (BROKAMP) <br> * Insgesamt * <br> --- | 1 | |
| A | GB-A-1 470 266 (ART & MEDIA) <br> * Seite 2, Zeile 73 - Seite 3, Zeile 86; Figuren 1-6 * <br> --- | 1 | |
| A | US-A-3 726 042 (HAILE) <br> * Insgesamt * <br> --- | 1,2 | |
| A | CA-A-1 152 326 (WHITING) <br> * Seite 6, Zeile 17 - Seite 12, Zeile 11; Figuren 1-4 * <br> --- | 1 | |
| A | GB-A- 933 846 (KROKER) <br> * Seite 1, Zeile 75 - Seite 2, Zeile 98; Figuren 1-7 * <br> ----- | 1 | |

**RECHERCHIERTE SACHGEBIETE (Int. Cl.4)**

A 01 G
E 04 C
B 65 D

Der vorliegende Recherchenbericht wurde für alle Patentansprüche erstellt

| Recherchenort | Abschlußdatum der Recherche | Prüfer |
|---|---|---|
| DEN HAAG | 01-12-1987 | HERYGERS J.J. |